# EUROPEAN PATENT SPECIFICATION

(11) **EP 3 933 487 B1**
(45) Date of publication and mention of the grant of the patent: **11.02.2026**
(21) Application number: 20183155.9
(22) Date of filing: 30.06.2020
(51) Int. Cl.: G02B 27/00, G02B 27/01

(54) **OPTICAL COMPONENT OF HUD APPARATUS, HUD APPARATUS AND A METHOD OF ADJUSTING IMAGE FORMATION IN HUD APPARATUS**
OPTISCHE KOMPONENTE EINER HUD-VORRICHTUNG SOWIE HUD-VORRICHTUNG
COMPOSANT OPTIQUE D'APPAREIL HUD ET APPAREIL HUD

(43) Date of publication of application: 05.01.2022
(73) Proprietor: Optea AB, 17279 Sundbyberg (SE)
(72) Inventor: Arboix, Esteban, 17279 SUNDBYBERG (SE); Alasaarela, Ilkka, 17279 SUNDBYBERG (SE)
(74) Representative: Kolster Oy Ab

(56) References cited:
- WO-A1-2016/014712
- US-A1- 2010 046 075
- US-A1- 2017 092 169
- US-A1- 2018 136 460

## Description

### Field

The invention relates to an optical component of a head's up display apparatus and a head's up display apparatus.

### Background

Head's up displays (HUDs) have been used in fighter jets and passenger cars, where they have proven advantages in human-machine interaction. In recent years, HUDs have been introduced for an off-highway vehicle (OHV), such as forest harvesters. In an off-highway vehicle, a HUD can provide benefits such as an improved work efficiency, better ergonomics, a faster user response, improved decision-making and a faster learning, for example. Document US 2010046075 presents an embedded relay lens for heads-up displays or the like. Document US 20170092169 presents a head-up display and a vehicle equipped with a head-up display. Document WO 2016014712 presents a compact heads-up display system.

The existing HUDs have, however, too small a field-of-view and eyebox. This is especially a problem in the HUDs in the OHV work machines. Additionally, the present optical solutions of the existing HUDs in the OHVs have challenges with respect to durability because of harsh OHV conditions. As these features have not be fulfilled, the existing HUD's are not optimal or even usable at all particularly in an OHV use. Hence, the present HUDs need to be improved.

### Brief description

The present invention seeks to provide improvement in the HUDs.

The invention is defined by independent claim 1. Embodiments are defined in the dependent claims.

### List of drawings

Example embodiments of the present invention are described below, by way of example only, with reference to the accompanying drawings, in which
Figures 1A, 1B and 1C illustrate examples of a head's up display (HUD) apparatus;
Figures 2, 3A, 3B, 4A, 4B and 5 illustrate examples of cross-sectional curvatures of a Fresnel lens;
Figures 6, 7, 8A, 8B and 9 illustrate examples of the Fresnel lens that has different Fresnel curves;
Figure 10 illustrates an example of the Fresnel lens that has a plurality of different kinds of Fresnel curves in different sections;
Figure 11 illustrates an example of walls of Fresnel curves;
Figure 12 illustrates an example of rounding of corners between the Fresnel curves;
Figure 13 illustrates an example of a diffusing screen;
Figure 14 illustrates an example of a diffusing screen with several layers;
Figure 15 illustrates an example of a HUD apparatus with more than one image sources, more than one diffusing screen and more than one PGUs;
Figure 16 illustrates an example where the image source is projected to the virtual image by the Fresnel lens and a planar combiner;
Figure 17 illustrates an example of another arrangement comprising a planar combiner;
Figure 18 illustrates an example of still another arrangement comprising a curved combiner;
Figure 19A illustrates an example of cylindrical fold mirror and cylindrical combiner;
Figure 19B illustrates another example where the HUD optical system forms a real intermediate image between the Fresnel lens and the combiner, which has a positive optical power;
Figure 20A illustrates an example of a digital correction of distortion;
Figure 20B illustrates an example of a digital correction of lateral color;
Figure 21 illustrates an example of a data processing unit which has at least one processor and at least one memory;
Figure 22 illustrates an example of a method of adjusting image formation of a head's up display apparatus.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

It should be noted that while Figures illustrate various embodiments, they are simplified diagrams that only show some structures and/or functional entities. The connections shown in the Figures may refer to logical or physical connections. It is apparent to a person skilled in the art that the described apparatus may also comprise other functions and structures than those described in Figures and text. It should be appreciated that details of some functions, structures, and the signalling used for operation and/or control are irrelevant to the actual invention. Therefore, they need not be discussed in more detail here.

The HUDs in OHV work machines have special requirements compared to existing HUDs, such as requirement for larger field-of-view (FOV), requirement for larger eyebox, and requirements for durability for harsh conditions. Because of these special requirements, the existing HUD's are not optimal, or even usable at all, for OHV use.

In the HUD solutions for the OHV, a larger FOV and a larger eyebox needed for the OHV use, requires large glass lenses, which are heavy, fragile and expensive to manufacture. Therefore there is a need for improved optical solutions for the HUDs dedicated to conditions of the OHV and conditions comparable to that of the OHV.

What is next explained presents a technical solution for improved HUDs of the OHV in order to alleviate the problems mentioned above.

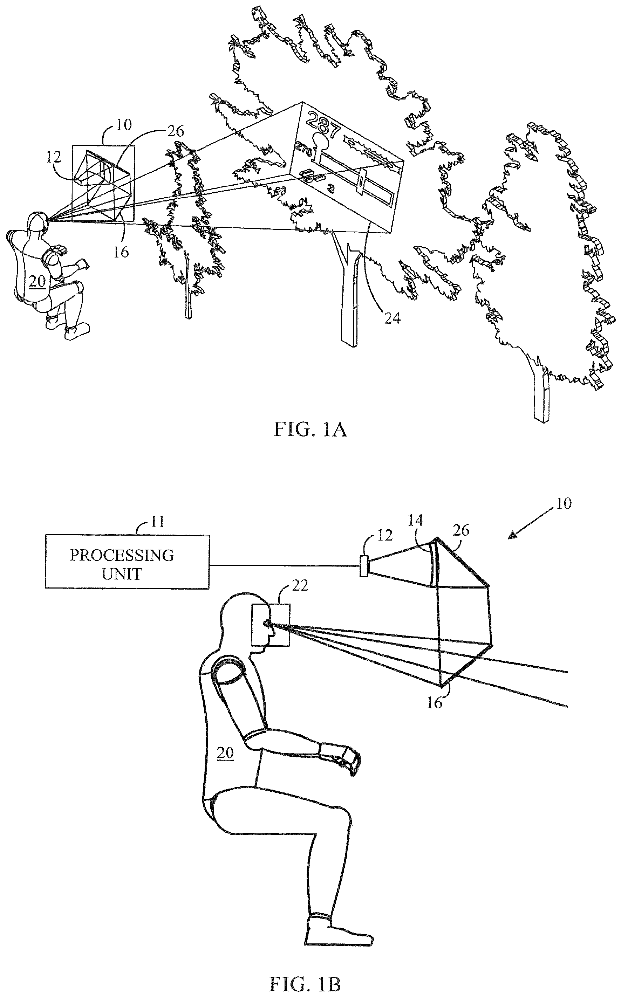

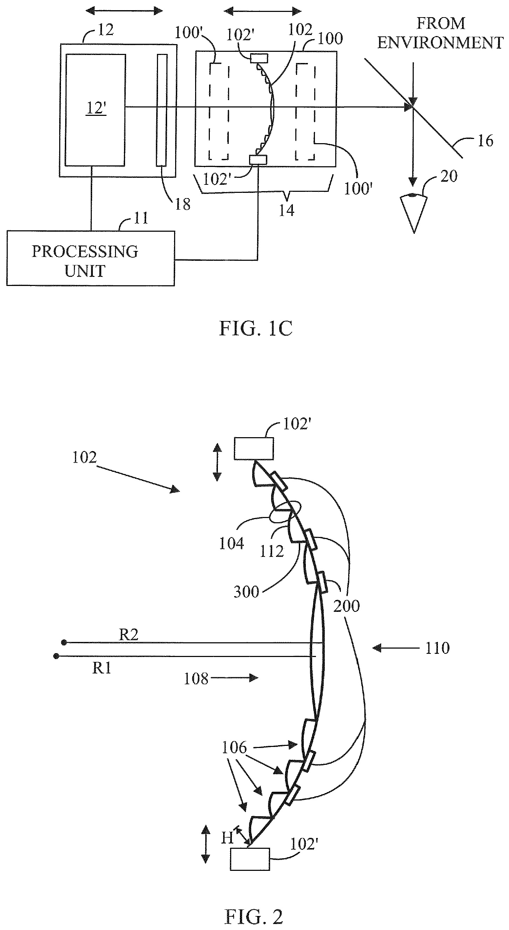

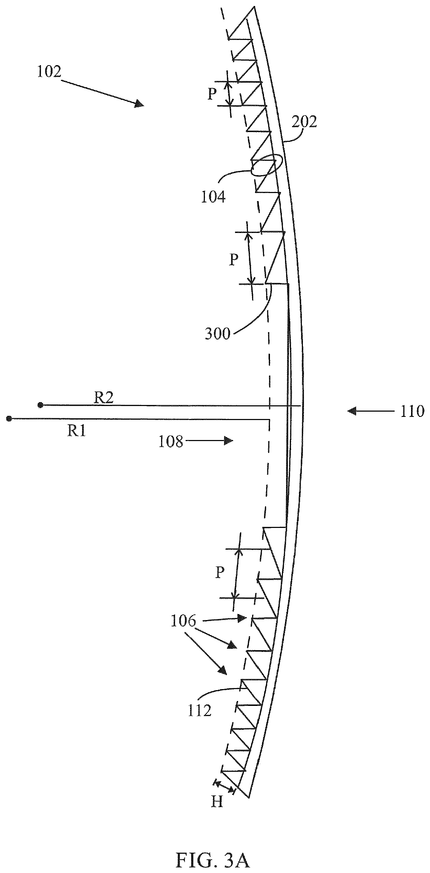

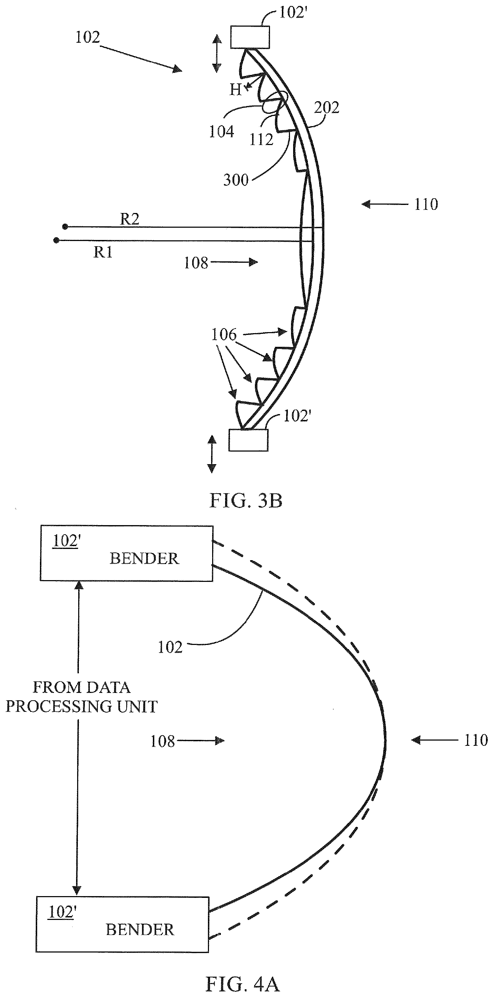

Figure 1A, 1B and 1C illustrate examples of a head's up display (HUD) apparatus 10. The HUD apparatus 10 comprises a picture generating unit (PGU) 12', a HUD optical system 14 and a combiner 16. The data processing unit 11, which the HUD apparatus 10 may also comprise, may control the PGU 12'. More generally, the HUD apparatus 10 may comprise one or more PGUs 12', one or more HUD optical systems 14 and one or more combiners 16. An optical component 100 that is meant to be used in the HUD apparatus 10 and particularly in the HUD optical system 14 comprises a Fresnel lens 102. Both sides 108, 110 of the Fresnel lens 102 are curved, and radiuses R1, R2 of curvatures of the opposite sides 108, 110 are on or are directed to a same side of the Fresnel lens 102 (see Figures 2, 3A and 3B). That is, the opposite surfaces curve similarly or to similar directions. In an embodiment, they may curve also the same manner.

The PGU 12' may comprise one or more light sources that form an illuminating image and its light propagates through the HUD apparatus 10 up to an observer 20. An image source 12 may be or may be formed by the PGU 12' alone but it may also be or may be formed by a diffusing screen 18, which the PGU 12' may project the image on, for example. The image of the PGU 12' may be a still image, a video image or a motion picture image, the video image and the motion picture referring to a sequence of images or sequence of parts of images in such rapid succession that the observer 20 is enabled to experience the illusion of movement.

In an embodiment an example of which is illustrated in Figure 1C, the image source 12, the PGU 12' and/or the HUD optical system 14 may move with respect to each other in order to focus the image and/or to correct optical aberrations for the user 20. In an embodiment, the Fresnel lens 102 may move for these purposes. The movement may be performed in a direction of an optical axis of the HUD apparatus 10. In an embodiment, the diffusing screen 18 may move with respect to the optical component 100. The movement may be performed in a direction parallel to an optical axis between the diffusing screen 18 and the optical component 100.

The PGU 12' may comprise a modulator which modulates the light of the image such that various images may be shown to the observer 20. The PGU 12' may comprise, for example, an illuminated spatial modulator such as an LCD (liquid-crystal display), an OLED (organic-light-emitting diode display), an LCOS (liquid-crystal on silicon), or a DMD (digital micro-mirror device) micro-display, which when illuminated, forms the image. The image may be formed directly on the spatial modulator plane, such as in LCD, LCOS or DMD projectors, or the image may be formed by diffraction such as in a HOLOEYE diffractive projection engine. The image may be projected from the spatial modulator to a real or virtual image for the HUD optical system 14 by using imaging optics.

The PGU 12' may alternatively or additionally comprise an angular modulator, such as a scanning mirror, or MEMS (micro-electro-mechanical-system) based scanning mirror modulator, which may be illuminated by a laser beams to form the image in angular domain, for example. The image may be projected to a real or virtual image for the HUD optical system 14. The formation of the image is not limited to any existing imaging technology, but the image may be formed by any means. A purpose is to form the virtual image 24 through the HUD apparatus 10 which has the at least one Fresnel lens 102 for the observer 20.

The HUD optical system 14 may form a magnified virtual image 24 of the image source 12, and reflect at least a portion of the light of the image source to the combiner 16, which reflects at least a portion of the same light towards an observer 20, who is typically an operator of a machine comprising the HUD apparatus 10. Here the magnification includes a magnification by one i.e. the image size does not change in addition to other values which may expressed using positive or negative real or rational numbers. A volume from which the virtual image 24 can be at least partially seen by eyes of the observer 20, is called as an eyebox 22. The HUD apparatus 10 may be designed such that the observer 20 can see the virtual image 24 through the combiner 16 approximately a few meters away from the observer 20, for example. The distance between the observer 20 and the virtual image 24 may vary from about 0.5 meter to about infinity, for example. The distance between the observer 20 and the virtual image 24 may typically be between 2 m and 10 m, for example. A full solid angle or a full plane angle of the virtual image 24 seen from the eyebox 22 is called field-of-view (FOV). A maximum diameter of the FOV may be between about 2° and about 90°, or between about 5° and about 25°, for example. A diameter or a diagonal of the eyebox 22 may be between about 70mm and about 400mm, or between about 100 and about 250 mm, for example. The eyebox 22 may have a shape of a cube or a sphere, for example.

A purpose of the PGU 12' with or without the diffusing screen 18, i.e. a purpose of the image source 12 is to create light in visible wavelengths with an image which can be a real image or a virtual image. The image source 12 may then be presented to the observer 20 as a magnified virtual image by the help of HUD optical system 14 and the combiner 16.

An etendue, i.e. a throughput, of the spatial modulator may be smaller than the etendue defined by the virtual image and the eyebox 22. In that case it may be beneficial to project the image from the spatial modulator to the diffusing screen 18, which may then work as the image source 12. The diffusing screen 18 may be partially or fully diffusing. The diffusing screen 18 may comprise for example: a semi-transparent diffuse film, such as a plastic film with color dyes; a ground glass plate; an engineered diffusing screen, such as micro-optical, diffractive or holographic engineered diffusing screen; and/or a reflective screen, such as used in projector canvas. The diffusing screen 18 may be curved in a static or dynamic manner. If the diffusing screen 18 is dynamically curved, its curvature may be adjustable and/or controllable.

A purpose of the combiner 16 is to reflect part of the light arriving from the HUD optical system 14 to the observer 20, while being substantially transparent such that the observer 20 can see through the combiner 16 in a substantially unobscured way. Another purpose of the combiner 16 is, together with the HUD optical system 14, to participate to a formation of the virtual image 24 of the image source 12 in a predetermined location, by combining and merging the virtual image 24 to the see-through scenery.

In a simple form, the combiner 16 may comprise a planar window, which is at least partially reflective and partially transparent. The window may reflect the light from the HUD optical system 14 to the eyebox 22, and so relocates the virtual image 24 provided by the HUD optical system 14 to a desired location in front of the eyebox 22. The combiner 16 may also be integrated to or with a planar windshield of a machine.

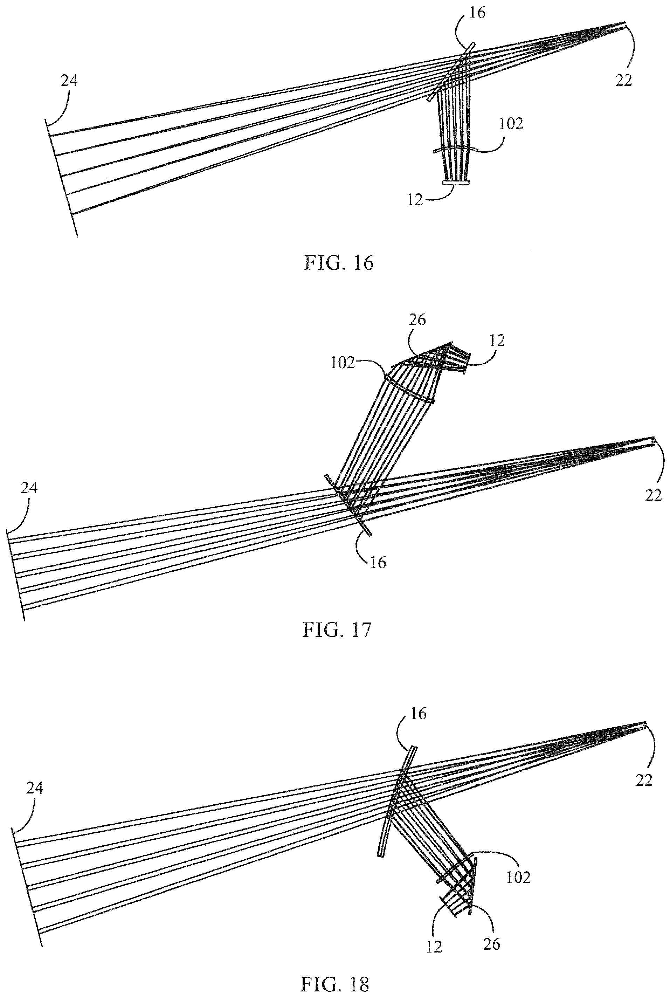

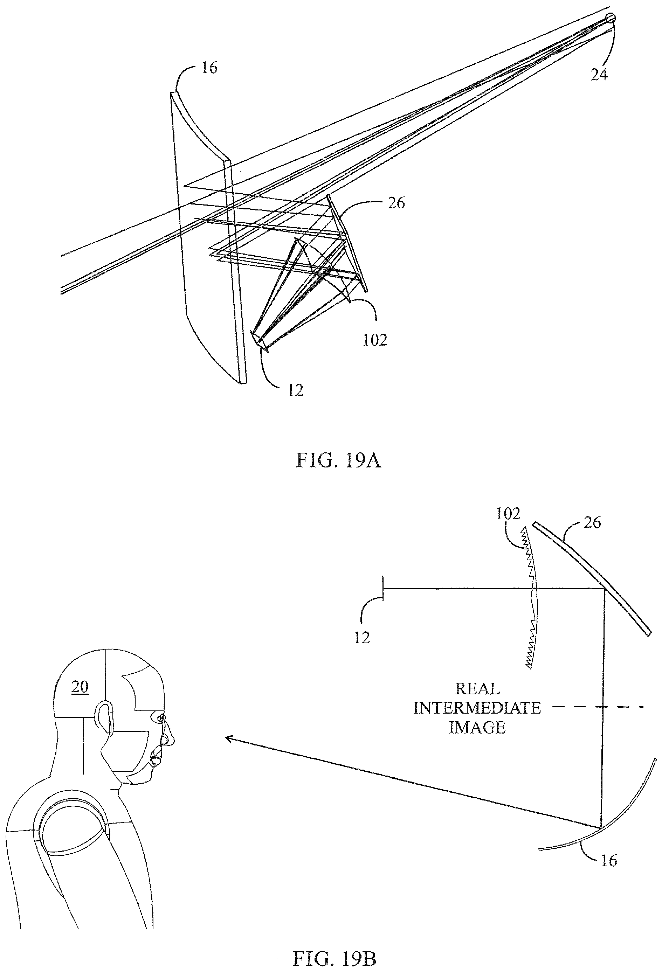

In an embodiment, the combiner 16 may be capable of performing an optical function to the reflected light similar to a positive or negative curved mirror or lens in addition to this reflective functionality. The optical function may be implemented by a curved shape, or by holographical or micro-optical structures, for example. This optical function participates in a formation of the virtual image 24 by adding or reducing magnification in one or two dimensions (see Figures 18, 19), and the optical operation may correct aberrations such as distortion, for example.

In an embodiment, the combiner 16 may be curved also for a reason that it may be integrated with a curved windshield, for example. In that case, the combiner 16 may act as a concave mirror, which may be biconic and aspherical. In an embodiment, the combiner 16 may be more strongly curved in one dimension than in another dimension, which dimensions may be horizontal and vertical dimensions, for example. In an embodiment, the combiner 16 may be a part of an anamorphic optics, which creates the virtual image 24 of the image source 12 with a different magnification in different dimensions. In this manner, an aspect ratio of the virtual image 24, i.e. a virtual image width divided by its height, may be different from an aspect ratio of the image source 12. A curvature of a windshield may be used for increasing the FOV compared to what could be achieved with a planar combiner 16 and using the HUD optical system 14 of otherwise same size.

In an embodiment, the combiner 16 may comprise a sheet of optically transparent material, which may be planar or curved, with a partially reflective and partially transparent coating on one side of the sheet. The opposite side of the sheet may be antireflection coated in order to prevent the combiner 16 to form a double virtual image visible to the observer 20. The coating may be an optical thin film coating, or a partial mirror coating, for example. The combiner 16 may use "tapering" to avoid double-reflection. Tapering means there is an angle between front and back surfaces of the combiner 16.

In an embodiment, the combiner 16 may comprise a hologram layer or micro-optical structure which acts as a partially reflecting and transmitting layer. Such a holographic or micro-optical part may add optical power to the system which is not restricted to the shape of the combiner 16.

In an embodiment, the combiner 16 may be a film type, i.e. it may comprise an optical film, which is at least partially transparent and partially reflective and spanned between two rigid holders, as described in patent USD727830. The film may be thin enough such that a double image will not be disturbing. The film may also have an antireflection coating on one side of the film. A surface on an opposite side of the film may have partially a reflective and partially transparent coating.

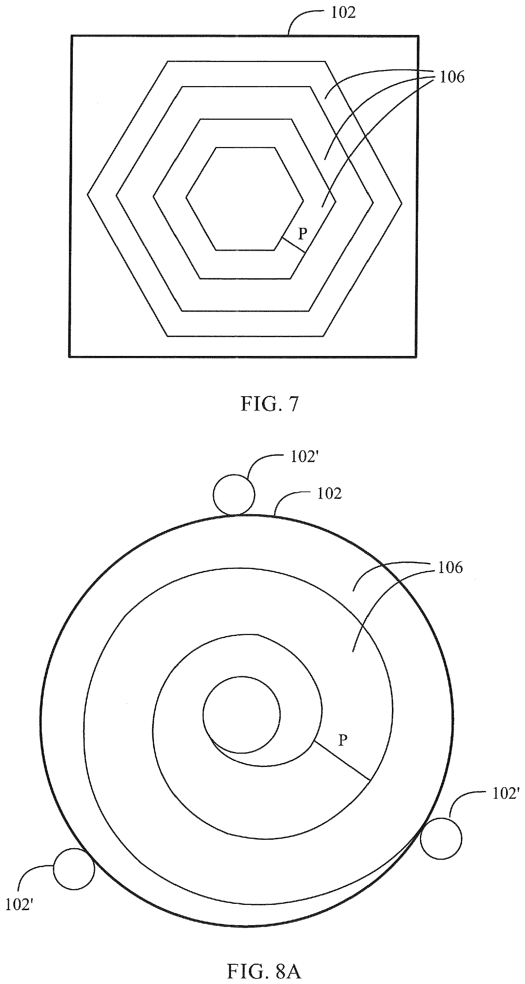

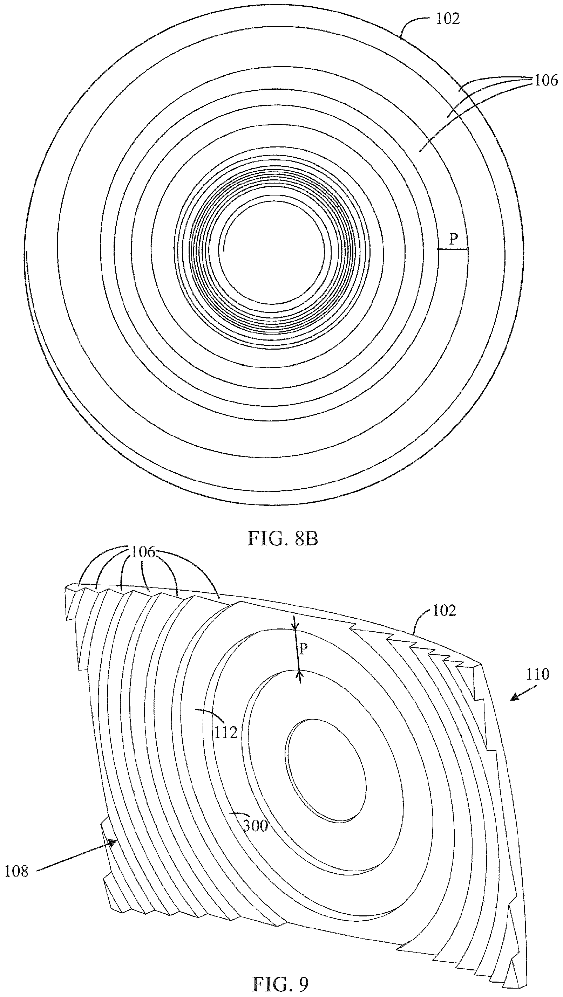

As shown in Figures 3A to 9, the Fresnel lens 102 **,** according to the claimed invention, comprises Fresnel curves 106. The Fresnel curves 106 are ridge structures that are responsible for the image forming property of the Fresnel lens 102. The Fresnel curves 106 wind around a center point in a lateral direction. In an embodiment, the Fresnel curves 106 may be circular such that they may fully or partly circle around a center point, a single Fresnel curve 106 being at a constant radial distance from the center point and different Fresnel curves 106 being at different radial distances from the center point. In an embodiment examples of which are illustrated in Figure 8A and 8B, the Fresnel curves 106 may be spiral such that they may fully or partly wind around the center point with increasing or decreasing radial distance. In an example of Figure 8A, the pitch is constant, and in Figure 8B the pitch is varying in the radial direction.

That both surfaces 108, 110 of the Fresnel lens 102 are curved means that an angle of a tangent that moves over the surface of the Fresnel lens 102 changes continuously or discretely. The curvature of a concave side 108 of the Fresnel lens 102 does not take into account the Fresnel curves 106, and a height variation of the Fresnel curves 106 can be considered filtered out from the curvatures of the Fresnel lens 102. The concave and convex sides 108, 110 of the Fresnel lens 102 may bend in a monotonous manner and they may be at least piecewisely smooth.

The Fresnel lens 102 is oriented in the HUD apparatus 10 such that the concave side 108 receives the light from the image source 12. A convex side 110 of the Fresnel lens 102 outputs the light that the Fresnel lens 102 has received and passed through, and directs the light toward the combiner 16 of the HUD apparatus 10.

Figures 2, 3A, 3B and 11 illustrate closer details of the Fresnel lens 102. A first surface 112 of each of the Fresnel curves 106 is on the concave side 108 of the Fresnel lens 102. The first surface 112 is responsible of the positive optical power to the Fresnel lens 102 while the convex side 110 of the Fresnel lens 102 may be smooth and curved in a monotonous manner. That is, the convex side 110 may be without a height variation regardless of a substrate 202. Namely, only such a part of the convex side 110 may be taken optically into account that is on an opposite side of the first surface 112 in an optical path through the Fresnel lens 102. That is, although the convex side 110 of the Fresnel lens 102 may be structurally only piece-wise smooth when it does not have the substrate 202, it is optically and structurally monotonously curved.

The first surface 112 is convex i.e. the first surface 112 is curved outwards. In other words, a radius of a curvature of the first surface 112 points toward a hemisphere opposite to that of the concave side 108 and that of the convex side 110. Still in other words, the first surface 112 is bulged toward a direction from which the Fresnel lens 102 receives light of the image source 12, whereas the Fresnel lens 102 as a whole is bulged toward a direction to which the light continues to travel from the Fresnel lens 102 after passing therethrough in order to arrive at the combiner 16.

A step 104, which represents a steep height variation of the height variation of the Fresnel curves 106, is between two first surfaces 112 that are directly adjacent to each other in a radial direction. That is, the step 104 is between two Fresnel curves 106 that are directly adjacent to each other. The step 104 may connect the two first surfaces 112 of the Fresnel curves 106 to each other. However, there may also be a gap between the Fresnel curves 106.

As already explained above, the HUD optical system 14 now comprises the Fresnel lens 102, which picks-up at least a portion of the light beam from the image source 12, and forms the virtual image to a predetermined distance from the observer 20, the virtual image being magnified.

In an embodiment, The HUD optical system 14 may comprise one or more fold mirrors 26 for turning the optical path, i.e. guiding light beam, to fit the HUD system better in the vehicle cabin, for example. The one or more fold mirrors 26 may be used between the PGU 12' and the diffusing screen 18, between the image source 12 and the Fresnel lens 102, and/or between the Fresnel lens 102 and the combiner 16, for example.

In an embodiment, the curvatures of the concave side 108 and the convex side 110 of the Fresnel lens 102 may determine at least one of the following: a field curvature, astigmatism, coma and spherical aberration of the HUD apparatus 10. Hence, the curvatures of the concave side 108 and the convex side 110 of the Fresnel lens 102 are designed to limit and/or correct any, some or all of these optical aberrations. The first surfaces 112, which provide the positive optical power of the Fresnel lens 102, and their interplay with the convex side 110 may result in a reduced optical aberration with respect to a corresponding but non-curved Fresnel lens.

In an embodiment, the curvatures of the concave side 108 and the convex side 110 of the Fresnel lens 102 may be adapted to meet an optical performance of the HUD apparatus 10. That means that as it is typically known at a design phase what the other optical components of the HUD apparatus 10 will have, the curvatures of the concave side 108 and the convex side 110 of the Fresnel lens 102 can be set in a range that is a response to the optical requirements of the HUD apparatus as a whole.

In an embodiment, the Fresnel lens 102 may be mechanically bendable by a first bender 102' controlled by the data processing unit 11 in order to vary the curvatures of the concave side 108 and the convex side 110 of the Fresnel lens 102 during operation. The curvature of the concave side 108 and the convex side 110 of the Fresnel lens 102 may thus be adjustable. The Fresnel lens 102 may be made of plastic material, and it may be thin enough to be bendable. The thinness of the Fresnel lens 102 is not a necessary condition, but the Fresnel lens 102 should be continuously or piecewisely bendable. Hence, the Fresnel lens 102 may allow an adjustment of the curvatures of the concave side 108 and the convex side 110. The curvature adjustment may be used for adjusting the imaging properties of the HUD apparatus 10 for even better image quality for example by better correction of field curvature for example. Note, that instead of shaping curvature only, the shape of the lens can be modified more freely, too, for example by bending, twisting and tilting, and any other way for implementing the desired shape adjustment functionality. The bender 102' may comprise a diaphragm (Figure 1C could have such) and/or approaching and distancing parts (see Figure 8A).

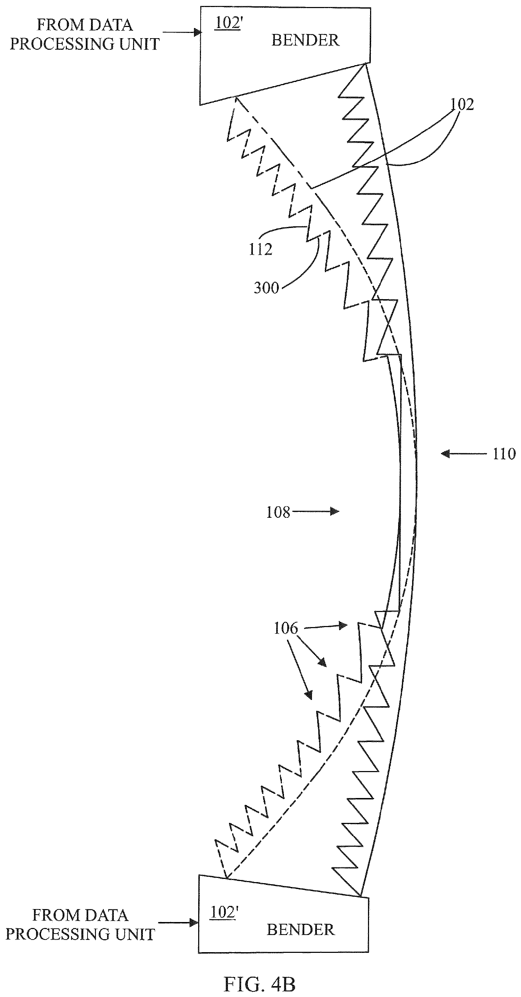

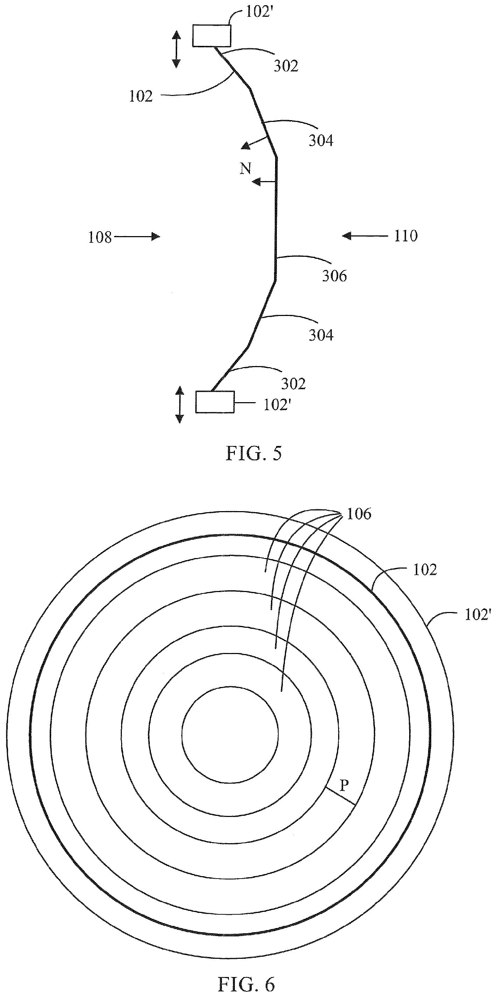

In an embodiment examples of which are illustrated in Figure 4A, 4B and 5, a cross-sectional curvature of the Fresnel lens 102 may be continuously different over the area of the Fresnel lens 102 (Figure 4A, 4B) or the cross-sectional curvature i.e. direction of a normal N of the surface of the Fresnel lens 102 may be different in different areas 302, 304, 306 of the Fresnel lens 102 (Figure 5). In an embodiment an example of which is illustrated in Figure 6, the Fresnel curves 106 may be cylindrically symmetric inside each segment.

The cross-sectional curvature of the Fresnel lens 102 may correspond to that of a circle, an ellipse, a parabola or the like for example. In a mathematical sense, a curve the cross-sectional curvature follows, may be continuously derivable (like those of the circle, the ellipse or the parabola) or the curve of the cross-sectional curvature may be piecewisely derivable.

In an embodiment an example of which is illustrated in Figure 5, the cross-sectional curve may not be smooth, but may be for example be piecewise linear, too. Similarly, the tangential shape (i.e. the shape around the approximate cylindrically symmetry) may not be smooth, but may be piecewise linear, for example.

In an embodiment an example of which is shown in Figure 7, the Fresnel curves 106 may be expressible as a spline function. An example of a spline function is that the Fresnel curves 106 are piecewisely linear such that the overall curvature of the Fresnel curves 106 resembles a circle of a spiral, for example. Figure 7 shows piecewise linear circular Fresnel curves 106. Instead of a linear function, any other type of function may be used to express a piece of a Fresnel curve 106.

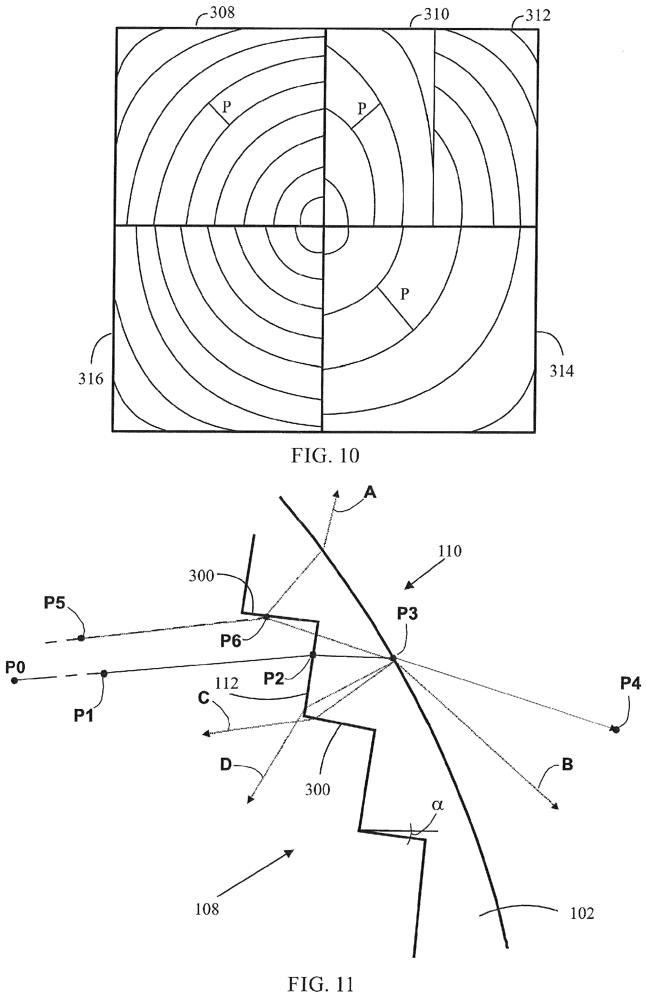

In an embodiment an example of which is illustrated in Figure 10, the Fresnel curves 106 need not to be cylindrically symmetric over the whole Fresnel lens 102, but a cylindrical symmetry of Fresnel curves 106 in areas 308 to 6of the Fresnel lens 102 may be different in different areas 308 to 316 of the Fresnel lens 102. That is, a density of the Fresnel curves 106 may vary in different areas 308 to 316, for example. Alternatively or additionally, one area may have circular Fresnel curves 106 whereas another areas may have spiral Fresnel curves, for example.

A curvature of the first surfaces 112 of the Fresnel lens 102 may be spherical or aspherical, or even biconic, depending on the exact required imaging geometry (see Figures 2, 3A, 3B and 11). The Fresnel curves 106 contain the first surfaces 112, and walls 300 that are vertical at the steps 104. The Fresnel curves 106 may be substantially cylindrically symmetric, but they do not need to cover the full circle, as the Fresnel lens 102 may also have other than a circular outer contour, such as rectangular. The first surfaces 112 perform their part of the imaging functionality, and the walls 300 that are vertical may be connections between the first surfaces 112. An advantage of the Fresnel curves 106 is that a slope/tangent of a first surface 112 may vary compared to that of the curvature of the concave side 108 of the Fresnel lens 102 at an optically corresponding position such that a same ray of light passes therethrough.

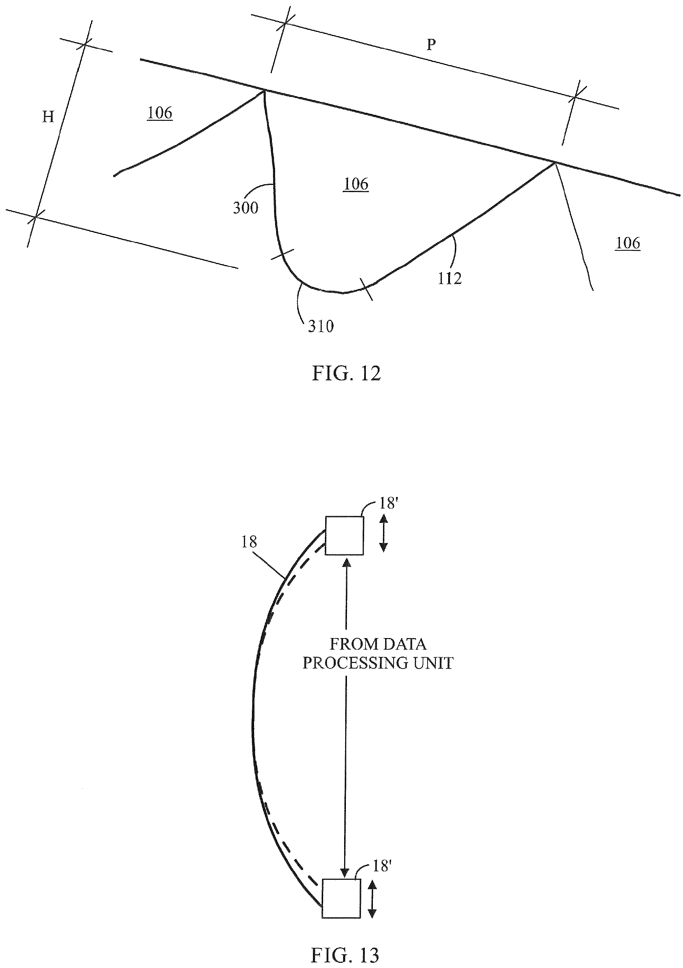

In an embodiment an example of which is illustrated in Figures 9 and 12 (see also Figures 3A, 6, 7, 8A, 8B, 10), a width P of a Fresnel curve 106, so called "pitch", may be constant over the whole Fresnel lens 102 or it may vary. For example, the pitch P may be larger at the center of the Fresnel lens 102 than that close to the edge. The pitch P may vary from a few micrometers to a few centimeter or from a few hundreds of micrometers to one centimeter, for example. The pitch P refers to the density of the Fresnel curves 106.

In an embodiment examples of which are illustrated in Figures 2, 3A and 3B for example, a height H of the Fresnel curves 106 may be constant over the whole Fresnel lens 102 (Figures 3A, 2) or it may vary (Figure 3B). In an embodiment, the height H may vary from a few micrometers to one centimeters, or from a few tens of micrometers to a few millimeters, for example. The Fresnel curves 106 directly adjacent to each other may be connected to each other at the step 104, where the vertical wall 300 is. There may be rounding at least part of the corners between the first surfaces 112 and the walls 300 (see Figure 12).

In an embodiment an example of which is shown in Figure 10, exact cylindrical symmetry may not be fulfilled in any portion of the Fresnel lens 102, but it may be enough that the surface shape substantially resembles a cylindrically symmetric shape.

In an embodiment an example of which is illustrated in Figure 11, an angle α of a wall 300 at a step 104 may vary at different parts of the Fresnel lens 102. Figure 11 also shows an example where cross-sectional rays of light propagate from the image source 12 through the Fresnel lens 102. A line P0-P1 represents a ray at the image source 12, the ray being imaged by the Fresnel lens 102 to the virtual image 24, which is located behind the Fresnel lens 102. A line P1-P2-P3-P4 represents a ray through the Fresnel lens 102. Other rays are shown for illustration only.

In Figure 11, ray P1-P2 is guided to a ray P3-P4 by the Fresnel lens 102. A shape of the convex side 110 of the Fresnel lens 102 and the Fresnel curves 106 define the local surface slopes at points P2 and P3. The inward curved shape of the convex side 110 and positive optical power of the Fresnel curves 106 i.e. the convex shape of the first surfaces 112 enable balancing the required total refraction power of surfaces of the both concave and convex side 108, 110 more equally than would be possible with a traditional Fresnel lens that has flat surfaces. In the other words, it is advantageous if an angle of a bending ray at an interface P2 and an angle of a bending ray at an interface P3 can be made more equal compared to the case where the refraction at least almost as a whole is made only in one interface. There is even more advantage when compared to the case where an interface on other side refracts the ray to a direction and only a single interface needs to do the whole refraction, and in addition to that compensate the refraction at the interface on the other side. The Fresnel lens 102 allows to distribute a required total refraction power of the Fresnel lens 102 between the surfaces of the concave side 108 and convex side 110 of the Fresnel lens 102 in an optimal manner on average over a whole area of the Fresnel lens 102. The more equal distribution of the refraction power between the surfaces of the concave and convex sides 108, 110, the more the Fresnel lens 102 decreases the spherical aberration, astigmatism and/or coma. In addition to that, the inward curved shape decreases or eliminates field curvature.

An ideal shape of the wall 300, that is vertical, may be such that it blocks as little as possible rays of light, which could be imaged from the image source 12 to the virtual image 22 observable from the eyebox 22 by the optical surfaces next to it. At the same time, the wall 300 should refract and reflect stray light away from the virtual image. In an embodiment, the wall 300 may be arranged parallel or close to parallel to an average input direction of rays of light coming to the Fresnel lens 102. Some manufacturing methods, such as injection molding, may restrict a possibility to freely set the wall 300 to such a direction. For example, in order to avoid undercut, an injection moldable surface may need at least a small (a few degree) angle to the parting direction in order to avoid undercuts. The parting direction may be parallel to the axis of the approximated rotational symmetry of the Fresnel curves 106. In an embodiment, the walls 300 may be conical with a few degree angle to the approximated rotational symmetry axis.

In Figure 11, an embodiment of some straylight management is also illustrated. A ray according to a line P5-P6 is refracted at a surface of a wall 300 and guided in a direction of a ray A, away from the eyebox 22 and observer 20. Similarly, a reflected portion of the same ray P5-P6 at the surface of the wall 300 is guided to a direction of a ray B, away from the eyebox 22 and observer 20. A ray according to a line P1-P2-P3 may also reflect at a point P3 of the surface on the convex side 110 and refract either from the first surface 112 to a direction of a ray C or from the wall 300 to a direction of a ray D, which both propagate safely away from the eyebox 22 and observer 20.

In an embodiment, the light which would hit the vertical wall(s) 300 may be masked out by using a mask component, in the PGU or in its close proximity, or directly on the Fresnel lens 102. In this manner, the straylight may be effectively surpressed.

In an embodiment an example of which is also illustrated in Figure 12, corners between the walls 300 and the first surfaces 112 of the Fresnel curves 106 may be rounded. In an embodiment, a corner rounding 310 of different Fresnel curves 106 may be cylindrically symmetric. In an embodiment, a corner rounding 310 of different Fresnel curves 106 may not be cylindrically symmetric. However, the curvature of the Fresnel curves 106, *per se,* of the first surfaces 112 may still be at least approximately cylindrically symmetric although the rounding is cylindrically asymmetric.

In an embodiment, the Fresnel lens 102 may be made of a flexible and optically transparent material. In an embodiment, the Fresnel lens 102 may be made of polymer. The material of the Fresnel lens 106 may be optical plastic, for example PMMA (polymethyl methacrylate), PC (polycarbonate), COC (cyclic olefin copolymer), PS (polystyrene), just to mention some. Other feasible plastics are for example PESU (polyethersulfone), PSU (polysulfone) and PPSU (polyphenylsulfone). Still alternatively, CR39, INDO Superfin, Trivex^{®}, Sola Spectralite, PPG HIP, and/or polyurethans may be utilized. The material of the Fresnel lens 102 may also be UV-curable resin. The Fresnel lens 102 may comprise of more than one material, for example two or more layers of different materials.

In an embodiment, the material of the Fresnel lens 102 may be selected from polymer materials based on their Abbe numbers in response to a requirement of a chromatic dispersion of the HUD apparatus 10. The Abbe number υ_{d} may be determined in a following mathematical manner: υ_{d} = (n_{D} - 1)/(n_{F} - nc), where n_{D} is a refraction index of the material measured using wavelength 587.6 nm, n_{F} is a refraction index of the material measured using wavelength 486.1 nm and nc is a refraction index of the material measured using wavelength 656.3 nm. The Abbe number of plastics is typically between 30 and 58.

In an embodiment an example of which is illustrated in Figure 2, the Fresnel lens 102 may comprise the Fresnel curves 106 and a support structure 200, which is configured to support the Fresnel curves 106 mechanically. A Fresnel lens 102 with circular Fresnel curves 106 requires the support 200 but a Fresnel lens 102 with spiral Fresnel curves 106 does not necessarily require the support structure 200.

In an embodiment, the support structure 200 may be substantially transparent in the visible range of optical radiation. The support structure 200 and the Fresnel curves 106 may be of the same solid block of material, or they may be different parts attached to each other. The substrate 200 may also be of different material than the Fresnel structure. The support structure 200 and Fresnel curves 106 may be glued together with an adhesive or they may be melted together, for example. In an embodiment, they may be mechanically attached together.

In an embodiment, the support structure 200 may be attached to and located between the Fresnel curves 106 on the convex side 110 of said Fresnel lens 102.

In an embodiment, the support structure 200 may be non-transparent in the visible range and the support structure 200 may cover only a part of the surface of Fresnel lens 102.

In an embodiment examples of which are illustrated in Figures 3A and 3B, the support structure 200 may comprise, on the convex side 110 of the Fresnel lens 102, a substrate 202, whereon the Fresnel curves 106 are build or fixed.

In an embodiment, the substrate 202 may be substantially transparent in the visible range of optical radiation. The substrate 202 and the Fresnel curves 106 may be of the same solid block of material, or they may be different parts attached to each other. The substrate 202 may also be of different material than the Fresnel curves 106. The support structure 202 and the Fresnel curves 106 may be glued together with an adhesive or they may be melted together, for example, if they are made of separate material structures. In an embodiment, they may be mechanically attached together. Figure 3A also illustrates the varying pitch P in a radial direction.

In an embodiment, the substrate 202 may have a substantially equal thickness on the convex side 110 of the Fresnel lens 102. In such a case, the curvatures of the surfaces on both sides 108, 110 are the same. In an embodiment, the substrate 202 may have a thickness variation which may be used to correct at least one optical aberration, for example. On the other hand, approximately uniform thickness has advantage for easier manufacturing by injection molding or embossing, for example.

In an embodiment an example of which is illustrated in Figure 1C, the optical component 100 may comprise at least one additional optical component 100' that reduces aberration of the Fresnel lens 102. The at least one additional optical component 100' may be made of one or more of various glass or polymer materials, and achromatic doublets can be used for correcting chromatic aberrations, for example.

The at least one additional optical component 100' may also guide the light from the image source 12 to the Fresnel lens 102. The at least one additional optical component 100' may comprise one or more lenses with different glass materials, and achromatic doublets can be used for correcting chromatic aberrations.

For example, the at least one lens, which may be continuous lens or another Fresnel optical lens, may be used close to the image source 12 as a field lens, i.e. for matching the entrance and exit pupils between the image source 12 generated by the PGU 12' and the rest of the HUD optical system 14. An exit pupil of the image source 12 and an entrance pupil of the HUD optical system 14 may be optically matched with each other. A person skilled in the art is familiar with matching an exit pupil and an entrance pupil with each other, *per se.* Matching the pupils may reduce or eliminate vignetting through the optical system.

The image source 12 generated by the PGU 12' need not to be real image, but may also be virtual. The image source 12 may be a real image on air, or inside an optically transparent material, or it may be a real image formed on a surface, which maybe at least partially diffusing screen 18.

The image source 12 may not be perfectly corrected image, but may have image aberrations. It is enough to correct aberrations to the presented virtual image 24 observed from the eyebox 22, which means that it is possible to balance aberration correction between the PGU 12', the HUD optical system 14 and the combiner 16. Hence, not necessarily all aberrations need to be corrected both in PGU 12' and the HUD optical system 14, but it is enough that all parts together achieve desired level of correction. So, it may be beneficial to have some aberrations in the image source 12, based on the PGU 12', the aberration(s) being correctable by opposite amount of the same aberration(s) in HUD optical system 14 and the combiner 16, or the other way round.

In an embodiment, the PGU 12' may form an image source 12 on a diffusing screen 18 which is curved, the curvature of the diffusing screen 18 being matched with a field curvature of the HUD optical system 14, and so the virtual image 24 may then be in focus over the whole FOV even if the field curvature of the HUD optical system 14 is not fully corrected. Similarly, the image source 12 may have a distorted image, the distortion being corrected by an opposite distortion of the HUD optical system 14. Still, the image source 12 may have lateral color, which may be corrected by an opposite axial color of the HUD optical system 14. The image source 12 may form images of different color channels at different axial positions, i.e. have axial color, which may then correct by an opposite axial color of HUD optical system 14. In an embodiment, the Fresnel lens 102 of the HUD optical system 14 may perform all these reductions or cancellations of the aberrations.

A distance of the virtual image 24 from the eyebox 22 may be adjustable, for example. In an embodiment, the adjustment may be performed by adjusting a position of the image source 12 with respect to the HUD optical system 14. In an embodiment, a distance between the Fresnel lens 102 and the diffusing screen 18 may be adjustable. For example the position of the diffusing screen or the Fresnel lens, or both, may be adjustable in respect to the HUD optical system. By that way, the distance of the virtual image 24 may be adjustable between few tens of centimeters and infinity, for example. This may be beneficial for adjusting a position of the virtual image 24 to match with the position of each work operation, for example in forest harvester or tractor which may perform various work tasks in different distances.

Similar to the distance, the orientation and lateral position of the image source 12 with respect to the HUD optical system 100 may be adjustable. This may be used to tilt and to move the observed virtual image 24 for better ergonomics. For example, tilting the image source 12 can be used to tilt the virtual image 24, and moving the image source 12 can be used to move a position the virtual image 24. Still, the shape of the image plane of the image source 12 can be adjusted for adjusting the shape of the image plane of the virtual image 24. For example, by adjusting the field curvature of the image source 12, the field curvature of the virtual image 24 can be adjusted.

In an embodiment an example of which is illustrated in Figure 1C, the diffusing screen 18 may be a planar plate. In an embodiment an example of which is illustrated in Figure 13, the diffusing screen 18 may be curved. The image may be curved before it is picked up by HUD optical system 14 if the diffusing screen 18 is curved. In an embodiment, a curvature of the diffusing screen 18 may be used for correcting a field curvature of the HUD optical system 14. In an embodiment, the curvature of the diffusing screen 18 may be used for managing a field curvature of the Fresnel lens 102. The curvature of the diffusing screen 18 may be opposite to the field curvature of the HUD optical system 14 such they cancel each other. The curvature of the diffusing screen 18 may be adjustable. The curvature may be adjusted by the second bender 18', which may be controlled by the data processing unit 11.

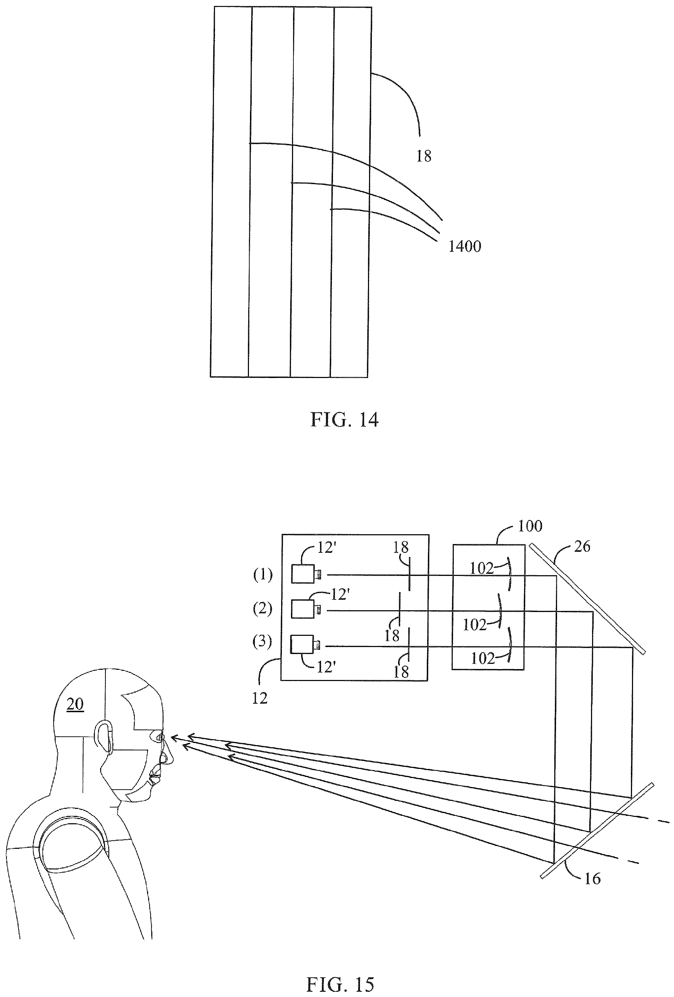

In an embodiment an example of which is illustrated in Figure 14, the diffusing screen 18 may be a wavelength dependent diffusing screen and may comprise a plurality of layers 1400, each layer diffusing only certain wavelength band and being substantially transparent to other wavelength bands. In an embodiment the diffusing screen 18 has three layers a first of which is for red light (R), a second of which is for green light (G) and a third of which is for blue light (B). The layers 1400 may be in a desired order. A diffusing screen 18 that has wavelength selective layers 1400 may be used for managing axial color aberration of the whole HUD optical system 14 or only the Fresnel lens 102, for example so that each color selective diffusing layer is matched to such axial position that it brings the virtual image of each color to the same focus position at observer's view. The color selectivity may be achieved holographically, for example. The curved diffusing screen 18 may also have a plurality of layers 1400.

In an embodiment an example of which is illustrated in Figure 15, the HUD apparatus 10 may comprise more than one image sources 12 which means that the HUD apparatus 10 may comprise more than one diffusing screen 18 and more than one PGUs 12'. One of the more than one PGUs 12'(1), 12'(2), 12'(3) and one of the more than one diffusing screen 18(1), 18(2), 18(3) are optically one-by-one paired such that one of the more than one PGUs 12'(1), 12'(2), 12'(3) are configured to form an image on only one of the at least one diffusing screen 18(1), 18(2), 18(3). One of the more than one optical components 100 and one of the more than one diffusing screens 18(1), 18(2), 18(3) are optically one-by-one paired such that one of the more than one optical component 100(1), 100(2), 100(3) is configured to direct the image from one of the more than one diffusing screens 18(1), 18(2), 18(3) toward the combiner 16. Each of the more than one diffusing screens 18(1), 18(2), 18(3) may have a curvature corresponding to that of a field curvature caused by the optical component 100 that is its optical pair. Each of the more than one diffusing screens 18(1), 18(2), 18(3) may have a curvature corresponding to that of a field curvature caused by the Fresnel lens 102(1), 102(2), 102(3) that is its optical pair.

Figure 16 shows an example of an embodiment with an arrangement where the image source 12 may be projected to the virtual image 24 by the Fresnel lens 102 and a planar combiner 16. The virtual image 24 can be observed from the eyebox 22 through the combiner 16.

Figure 17 shows an example of an embodiment with another arrangement comprising a planar combiner 16. A planar fold mirror 26 may be located between the image source 12 and the Fresnel lens 102 in order to bend the HUD optical system 14 such that the image source 12 is more vertical, and allows a better fitting of PGU 12' inside the cabin of the OHV.

The fold mirror 26 may also be positioned between the Fresnel lens 102 and the combiner 16. The orientation of the fold mirror 26 and/or the combiner 16 may be adjustable either manually or by an actuator such as a motor, which allows adjusting virtual image position with respect to the eyebox 22.

Figure 18 shows an example of an embodiment with still another arrangement of HUD optical system 14, where the image source 12 may be imaged by a planar or non-planar fold mirror 26, a Fresnel lens 102 and a curved combiner 16 to a virtual image 24 observable from the eyebox 22 through the combiner 16. The combiner 16 is curved in both horizontal and vertical dimension towards the HUD optical system 14, which brings extra magnification to the virtual image in addition to the magnification by the HUD optical system 14. The curved combiner 16 may be integrated with the windshield.

Figures 19A shows an example of an embodiment, where the Fresnel lens 102, the fold mirror 26, and the cylindrical combiner 16 together may form the virtual image 24 of the image source 12, which virtual image 24 is visible in the eyebox 22 through the combiner 16. In an example of Figure 19A also the fold mirror 26 is cylindrical. The combiner 16 may be a part of a windshield. The Fresnel curves 106 of the Fresnel lens 102 are cylindrically symmetric, apart from the rectangular outer shape of it. The windshield may be curved in horizontal dimension, but has other curvature in vertical dimension. That combination causes horizontal and vertical rayfans to form focuses of the virtual image 24 at different distances from eyebox 22. That may be corrected by using cylindrical fold mirror 26 instead of planar one. The cylindrical shape may be selected such that it brings the horizontal and vertical focus distances together.

The curvature of the combiner 18, and/or the curvature of the fold mirror 16, may be adjustable manually and/or by an actuator such as a motor, for example. This may be used for adjusting the magnification and FOV in one or two dimensions, for example.

In an embodiment according to the example of Figure 19B, it is possible that the HUD optical system 14 alone may form no virtual image of the image source 12, but it forms a real intermediate image between the combiner 16 and the optical component 100 and/or the Fresnel lens 102. The combiner 16 may have a positive optical power which then forms the virtual image 24 of the real intermediate image.

A thickness of the Fresnel lens 102 may be approximately 1mm to 6mm, for example. The thickness of the Fresnel lens 102 may be approximately 0.1mm to 50 mm, for example. The pitch P may vary between about 20mm and about 0.2mm, for example. The pitch P may vary between about 0.01mm and about 50mm, for example. The height of the Fresnel curves 106 may be constant between about 0.1mm to about 0.6mm, for example. The height of the Fresnel curves 106 may be constant between about 0.005mm to about 20mm, for example. The wall 300 may have about 1° to about 10° angle with a rotational symmetry axis and/or an optical axis of the Fresnel lens 102, for example. The wall 300 may have about 0° to about 60° angle with a rotational symmetry axis and/or an optical axis of the Fresnel lens 102, for example. A diameter of the Fresnel lens 102 may be about 200mm to 400mm, for example. A diameter of the Fresnel lens 102 may be about 50mm to 1000mm, for example. A radius of curvature of the Fresnel lens 102 may vary between about 200mm to about 500mm, for example. The radius of curvature of the Fresnel lens 102 may vary between about 30mm to about 10000mm, for example.

The use of a Fresnel lens 102 in the HUD apparatus 10 results in compact and light weighted entity with optics that is not fragile. The Fresnel lens 102 is also very suitable for a mass production. The Fresnel lens 102 that is curved may also eliminate or reduce a need of optical components that correct optical aberrations because a good image quality may be directly available and controllable with the Fresnel lens 102.

A prior art HUD apparatus 10 comprises multiple optical elements, such as glass lenses or planar or curved mirrors in the HUD optical system 14. The optical components work as a large magnifying glass creating a virtual image of the image source. The drawback of these solutions is that the FOV and a size of the eyebox are restricted due to size limitations in a practical use of the large glass lenses or large curved mirrors.

### Distortion digital correction

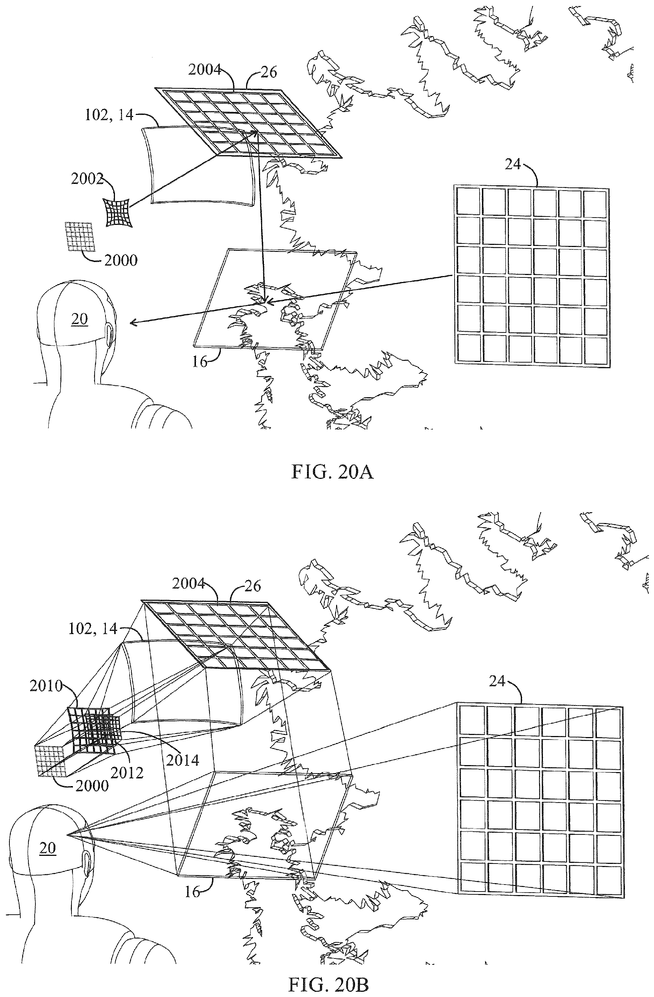

Figure 20A illustrate an example of a digital predistortion, which may be performed by the data processing unit 11. A digital form 2000 of an image is in the data processing unit 11. When the digital image is output as an optical image 2002, the optical image 2002 with the predistortion may be formed digitally in the data processing unit 11. The optical system 14 may have an opposite distortion to the predistiortion, and a combination of the predistortion and the distortion may result in a non-distorted or distortion corrected image 2004 (illustrated in Figure 20A as if a corrected image of the image source 12 were observable on the fold mirror 26 although the image may not be in focus on the fold mirror 26). The user 20 can see the non-distorted or distortion corrected image 2004 as the virtual image 24.

In other words, if the distortion is not fully corrected optically in the HUD optical system 14, it may be fully or partially corrected in digital processing. The image data transferred to the PGU 12' can be modified to include an opposite distortion such that the image seen by the observer 20 is substantially free of distortion. For example, if HUD optical system introduces a barrel distortion, the image data for the PGU 12' may be digitally modified by pincushion distortion of same magnitude as the barrel distortion such that the digital distortion and optical distortion cancel each other.

### Lateral color digital correction

Similarly to the digital correction of distortion also lateral color may be corrected under control of the data processing unit 11, an example of which is illustrated in Figure 20B.

If lateral color is not fully corrected optically in the HUD optical system 14, it may be at least partially corrected digitally. Lateral color aberration forms virtual image of different shape and potentially of different form by different wavelengths of light. Thus, when image contains features whose color is combination of several discrete wavelengths, the image of the feature is divided to several images of different size and shape, each with different wavelength. Or, if image is formed by wide continuous spectral band, the image of the feature is spread accordingly. As typically the PGU formed image source 12 consists of a few color channels (such as red, green and blue), the lateral color causes the image to divide into separate images, each one of the images being formed of only one of the color channels (such as red, green and blue images). The lateral color additionally spreads the image of each of the color channels according to the spectral width of the color channel.

In an embodiment, the images of different channels can be matched by digital correction, by adjusting image content of each color channel individually. For example, due to lateral color aberration, the virtual image 24 formed by blue color channel may be larger than the virtual image formed by the red color channel. This can be corrected by adjusting a size of the image of the blue color channel digitally smaller than a size of the digital image of the red color channel. In this manner, sizes of the images of the blue and red color channels may be made equal and overlap on each other at the virtual image. In a similar manner, all three colors red, green and blue may be corrected in order to reduce or eliminate lateral color.

In the example of Figure 20B, a digital form 2000 of an image is in the data processing unit 11. When the digital image is output as an optical RGB image (red-green-blue image), and a red-image 2010 may be digitally processed to have a first predistortion, a green-image 2012 may be digitally processed to have a second predistortion, and a blue-image may be processed to have a third predistortion. The predistortion may include magnification, which may be laterally constant or variable, and/or a barrel/pincushion distortion. The optical system 14 may have an opposite lateral color distortion to the predistortion, and a combination of the predistortion and the lateral color distortion may result in a non-distorted or distortion corrected image 2004 (illustrated in Figure 20B as if a corrected image of the image source 12 were observable on the fold mirror 26 although the image may not be in focus on the fold mirror 26). The user 20 can see the non-distorted or distortion corrected image 2004 as the virtual image 24.

In an embodiment, this spread caused by the lateral color caused spread inside each of the individual color channels may be decreased by decreasing the spectral width of the channel, i.e. using a narrow wavelength band.

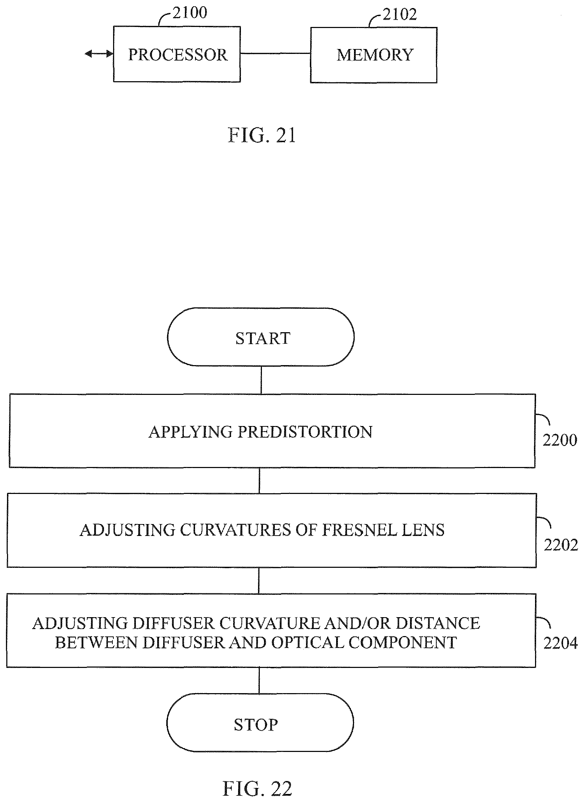

Figure 21 illustrates an example of the data processing unit 11. The data processing unit 11 may comprise one or more processors 2100 and one or more memories 2102 including computer program code. The one or more memories 2102 and the computer program code with the one or more processors 2100 may cause HUD apparatus 10 to correct distortion and/or lateral color digitally of the optical component 100 by applying an opposite distortion and/or lateral color to the picture generating unit 12'.

In an embodiment, the one or more processors 2100 and the one or more memories 2102 may cause with the computer program code the HUD apparatus 10 to control a second bender 18' to adjust a curvature of diffusive screen 18.

In an embodiment, the one or more processors 2100 and the one or more memories 2102 may cause with the computer program code the HUD apparatus 10 to control a first bender 102' to adjust curvatures of a concave side 108 and a convex side 110 of the Fresnel lens 102.

In an embodiment, the one or more processors 2100 and the one or more memories 2102 may cause with the computer program code the HUD apparatus 10 to move the diffusing screen 18 in order to locate the virtual image 24 in a desired manner.

Figure 22 illustrates an example of a flow chart of a method of adjusting image formation of a head's up display apparatus. In step 2200, distortion and/or lateral color an optical component 100 of the head's up display apparatus 10 are/is corrected digitally of by applying an opposite distortion and/or lateral color to the image source 12, the optical component 100 including a Fresnel lens 102 and locating between the image source 12 of the head's up display apparatus 10 and a combiner 16 of the head's up display apparatus 10. In an optional step 2202, curvatures of a concave side 108 and a convex side 110 of the Fresnel lens 102 are adjusted by a first bender 102'. In an optional step 2204, a curvature of a diffusing screen 18 and/or a distance between the diffusing screen 18 and optical component 100 is adjusted. Then a distance between the diffusing screen 18 and the Fresnel lens 102 may be adjusted (see Figure 1C).

The optical design of the Fresnel lens 102 and the HUD apparatus 10, may be made with an optical design software such as Zemax OpticStudio (Zemax LLC, USA), Code V (Synopsys Inc., USA), Oslo (Lambda Research Corporation, USA) by using the instructions and teachings of this document.

The Fresnel lens 102 may be manufactured by injection molding, compression injection molding, diamond turning, embossing, UV-embossing, hot-embossing, any of their combination, or the like, for example.

The Fresnel lens 102 may be integrated with other parts, such as alignment features, mounting collar, sealing grooves, or mounting holes just to mention some. When the Fresnel lens 102 is manufactured by plastic injection molding, these other integrated parts and features may be formed in the same solid plastic part as the Fresnel lens 102 with or without the support 200.

The method shown in Figure 22 may be implemented as a logic circuit solution or computer program. The computer program may be placed on a computer program distribution means for the distribution thereof. The computer program distribution means is readable by a data processing device, and it encodes the computer program commands, carries out the operation of the HUD apparatus 10.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

This document teaches how to replace HUD optics containing at least one large and expensive glass lens or curved mirror with easier mass-manufacturable optics by a curved Fresnel lens that is suitably orientated. Also aberrations may simultaneously be corrected by optically and/or digitally. The available degrees of freedom of the Fresnel lens may be utilized for correcting the aberrations and minimizing straylight. While only a minimals optical surfaces may be in use (Fresnel input and output surfaces) it is not necessarily possible to fully correct chromatic aberration, but it may managed digitally, for example, or optically. Another aberrations such as distortion may be left out from the Fresnel optimization task. After these decisions, the remaining dominating aberrations degrading the image quality are field curvature, astigmatism, spherical aberration and coma. In addition to these aberrations, stray light from the HUD optics itself, and from ambient sources, may be managed such that the stray light is directed away from the user/observer 20 and thus does not disturb him/her.

The structure of the Fresnel lens 102 is inward curved i.e. curved towards the image source (concave on input side), and the Fresnel curves 106 with positive optical power are on the surface that receives light. Inward curvature may be used to minimize field curvature, for example. Inward curvature combined with the Fresnel curves 106 on the receiving surface divides the total required refraction power for each ray between the input and output surfaces better, which may be used to minimize aberrations such as astigmatism, coma and spherical aberration. More precise aberration correction may be obtained by controlling separately Fresnel lens' input and output surface curvatures, which may lead to non-uniform thickness over the Fresnel lens' area, but allows an extra degrees of freedom for the aberration control. Fresnel lens' inward curvature combined with the Fresnel curves 106 on the input side is an effective arrangement for stray-light suppression, too.

In this approach, the possibilities to fully correct distortion and lateral color may be at least partially sacrificed in order to optimize performance for correcting other aberrations. Therefore digital correction may be used for correcting distortion and lateral color if needed, for example.

It will be obvious to a person skilled in the art that, as technology advances, the inventive concept can be implemented in various ways. The invention and its embodiments are not limited to the example embodiments described above but may vary within the scope of the claims.

## Claims

1. An optical component (100) of a head's up display apparatus (10),
wherein the optical component (100) comprises a polymer Fresnel lens (102), both sides (108, 110) of which have curvatures curved to a same direction so as to form a concave side (108) and a convex side (110), and radiuses (R1, R2) of the curvatures of the both sides (108, 110) are on or are directed to a same side of the Fresnel lens (102);
said Fresnel lens (102) comprises Fresnel curves (106) on the concave side (108) of the Fresnel lens (102), wherein each of the Fresnel curves (106) comprises a first surface (112), and the first surface (112) being configured to provide a positive optical power to said Fresnel curves (106); and
said Fresnel lens (102) is oriented such that the concave side (108) is configured to receive light from an image source (12) of the head's up display apparatus (10), and the convex side (110) is configured output the light that is received and passed through the Fresnel lens (102), the Fresnel lens (102) as a whole being bulged toward a direction to which the light continues to travel from the Fresnel lens (102) after passing therethrough, and direct the light toward a combiner (16) of the head's up display apparatus (10).

2. The optical component of claim 1, wherein the curvatures of said Fresnel lens (102) are configured to limit at least one of the following: a field curvature, astigmatism, coma and spherical aberration of the Fresnel lens (102).

3. The optical component of claim 1 or 2, wherein said Fresnel lens (102) is configured to be mechanically bendable in order to vary the curvatures of said Fresnel lens (102).

4. The optical component of claim 1, wherein said Fresnel lens (102) comprises the Fresnel curves (106) and a support structure (200), which is configured to support the Fresnel curves (106) mechanically.

5. The optical component of claim 1, wherein the optical component (100) comprises additional optical components (100') that are configured to reduce aberration of the optical component.

6. A head's up display apparatus, wherein the head's up display apparatus (10) comprises at least one optical component (100) of claim 1.

7. The head's up display apparatus of claim 6,
wherein the head's up display apparatus (10) comprises at least one diffusing screen (18) and at least one picture generation unit (12');
one of the at least one picture generation unit (12') and one of the at least one diffusing screen (18) are optically paired such that one of the at least one picture generation unit (12') is configured to form an image on one of the at least one diffusing screen (18);
one of the at least one optical component (100) and one of the at least one diffusing screen (18) are optically paired such that one of the at least one optical component (100) is configured to direct the image from one of the at least one diffusing screen (18) toward a combiner (16).

8. The head's up display apparatus of claim 7, wherein the at least one diffusing screen (18) comprises a wavelength dependent diffusing screen.

9. The head's up display apparatus of claim 7**,** wherein an exit pupil of the image source (12) and an entrance pupil of the HUD optical system (14) are optically matched with each other.

10. The head's up display apparatus of claim 7, wherein each of the at least one diffusing screen (18) has a curvature corresponding to that of a field curvature caused by the optical component (100) that is its optical pair.

11. The head's up display apparatus of claim 7**,** wherein the head's up display apparatus comprises one or more processors (2100), and one or more memories (2102) including computer program code; and
the one or more memories (2102) and the computer program code are configured to, with the one or more processors (2100), cause the head's up display apparatus (10) to correct distortion and/or lateral color digitally of the optical component (100) by applying an opposite distortion and/or lateral color to the picture generating unit (12').

12. The head's up display apparatus of claim 7, wherein the one or more memories (2102) and the computer program code are configured to, with the one or more processors (2100), cause the head's up display apparatus (10) to control at least one of the following: a first bender (102') to adjust curvatures of a concave side (108) and a convex side (110) of the Fresnel lens (102), and a second bender (18') to adjust a curvature of diffusive screen (18).

## Patentansprüche

1. Optische Komponente (100) einer Head-up-Display-Vorrichtung (10), wobei die optische Komponente (100) eine Polymer-Fresnel-Linse (102) umfasst, von der beide Seiten (108, 110) Krümmungen aufweisen, die in einer gleichen Richtung gekrümmt sind, um eine konkave Seite (108) und eine konvexe Seite (110) zu bilden, und Radien (R1, R2) der Krümmungen der beiden Seiten (108, 110) sich auf einer gleichen Seite der Fresnel-Linse (102) befinden oder dorthin gerichtet sind;
die Fresnel-Linse (102) Fresnel-Kurven (106) auf der konkaven Seite (108) der Fresnel-Linse (102) umfasst, wobei jede der Fresnel-Kurven (106) eine erste Oberfläche (112) umfasst und die erste Oberfläche (112) dazu ausgestaltet ist, den Fresnel-Kurven (106) einen positiven Brechwert bereitzustellen; und
die Fresnel-Linse (102) derart ausgerichtet ist, dass die konkave Seite (108) dazu ausgestaltet ist, Licht von einer Bildquelle (12) der Head-up-Display-Vorrichtung (10) zu empfangen, und die konvexe Seite (110) dazu ausgestaltet ist, das Licht abzugeben, das von der Fresnel-Linse (102) empfangen wird und diese durchquert, wobei die Fresnel-Linse (102) als Ganzes hin zu einer Richtung gewölbt ist, in die das Licht sich weiterhin von der Fresnel-Linse (102) bewegt, nachdem es diese durchquert hat, und das Licht hin zu einem Kombinationselement (16) der Head-up-Display-Vorrichtung (10) zu richten.

2. Optische Komponente nach Anspruch 1, wobei die Krümmungen der Fresnel-Linse (102) dazu ausgestaltet sind, mindestens eines von Folgendem zu begrenzen: eine Feldkrümmung, Astigmatismus, Koma und sphärische Aberration der Fresnel-Linse (102) .

3. Optische Komponente nach Anspruch 1 oder 2, wobei die Fresnel-Linse (102) dazu ausgestaltet ist, mechanisch biegbar zu sein, um die Krümmungen der Fresnel-Linsen (102) zu variieren.

4. Optische Komponente nach Anspruch 1, wobei die Fresnel-Linse (102) die Fresnel-Kurven (106) und eine Stützstruktur (200) umfasst, die dazu ausgestaltet ist, die Fresnel-Kurven (106) mechanisch zu stützen.

5. Optische Komponente nach Anspruch 1, wobei die optische Komponente (100) zusätzliche optische Komponenten (100') umfasst, die dazu ausgestaltet sind, Aberration der optischen Komponente zu vermindern.

6. Head-up-Display-Vorrichtung, wobei die Head-up-Display-Vorrichtung (10) mindestens eine optische Komponente (100) nach Anspruch 1 umfasst.

7. Head-up-Display-Vorrichtung nach Anspruch 6, wobei die Head-up-Display-Vorrichtung (10) mindestens eine Streuscheibe (18) und mindestens eine Bilderzeugungseinheit (12') umfasst;
eine von der mindestens einen Bilderzeugungseinheit (12') und eine von der mindestens einen Streuscheibe (18) derart optisch gepaart sind, dass eine von der mindestens einen Bilderzeugungseinheit (12') dazu ausgestaltet ist, ein Bild auf einem der mindestens einen Streuscheibe (18) zu bilden;
eine von der mindestens einen optischen Komponente (100) und eine von der mindestens einen Streuscheibe (18) derart optisch gepaart sind, dass eine von der mindestens einen optischen Komponente (100) dazu ausgestaltet ist, das Bild von einer von der mindestens einen Streuscheibe (18) hin zu einem Kombinationselement (16) zu richten.

8. Head-up-Display-Vorrichtung nach Anspruch 7, wobei die mindestens eine Streuscheibe (18) eine wellenlängenabhängige Streuscheibe umfasst.

9. Head-up-Display-Vorrichtung nach Anspruch 7, wobei eine Austrittspupille der Bildquelle (12) und eine Eintrittspupille des optischen HUD-Systems (14) optisch aufeinander abgestimmt sind.

10. Head-up-Display-Vorrichtung nach Anspruch 7, wobei jede von der mindestens einen Streuscheibe (18) eine Krümmung aufweist, die derjenigen einer Feldkrümmung entspricht, die von der optischen Komponente (100) bewirkt wird, die ihr optisches Gegenstück ist.

11. Head-up-Display-Vorrichtung nach Anspruch 7, wobei die Head-up-Display-Vorrichtung einen oder mehrere Prozessoren (2100) und einen oder mehrere Speicher (2102) umfasst, die Computerprogrammcode umfassen; und
der eine oder die mehreren Speicher (2102) und der Computerprogrammcode dazu ausgestaltet sind, mit dem einen oder den mehreren Prozessoren (2100) die Head-up-Display-Vorrichtung (10) zu veranlassen, Verzeichnung und/oder Farbquerfehler der optischen Komponente (100) digital mittels Anwendens einer bzw. eines entgegengesetzten Verzeichnung und/oder Farbquerfehlers auf die Bilderzeugungseinheit (12') zu korrigieren.

12. Head-up-Display-Vorrichtung nach Anspruch 7, wobei der eine oder die mehreren Speicher (2102) und der Computerprogrammcode dazu ausgestaltet sind, mit dem einen oder den mehreren Prozessoren (2100) die Head-up-Display-Vorrichtung (10) zu veranlassen, mindestens eines von Folgendem zu steuern:
eine erste Biegevorrichtung (102') zum Anpassen von Krümmungen einer konkaven Seite (108) und einer konvexen Seite (110) der Fresnel-Linse (102) und eine zweite Biegevorrichtung (18') zum Anpassen einer Krümmung der Streuscheibe (18).

## Revendications

1. Composant optique (100) d'un appareil HUD *(head's up display)* (10), dans lequel le composant optique (100) comprend une lentille de Fresnel en polymère (102), dont les deux côtés (108, 110) présentent des courbures dans une même direction de façon à former un côté concave (108) et un côté convexe (110), et les rayons (R1, R2) des courbures des deux côtés (108, 110) se trouvent sur ou sont dirigés vers un même côté de la lentille de Fresnel (102) ;
ladite lentille de Fresnel (102) comprend des courbes de Fresnel (106) sur le côté concave (108) de la lentille de Fresnel (102), dans lequel chacune des courbes de Fresnel (106) comprend une première surface (112), et la première surface (112) est configurée pour fournir une puissance optique positive auxdites courbes de Fresnel (106) ; et
ladite lentille de Fresnel (102) est orientée de sorte que le côté concave (108) soit configuré pour recevoir de la lumière en provenance d'une source d'images (12) de l'appareil HUD (10), et que le côté convexe (110) soit configuré pour délivrer en sortie la lumière qui est reçue et qui passe à travers la lentille de Fresnel (102), la lentille de Fresnel (102) dans son ensemble étant bombée vers une direction dans laquelle la lumière continue à se propager depuis la lentille de Fresnel (102) après être passée à travers celle-ci, et pour diriger la lumière vers un combineur (16) de l'appareil HUD (10).

2. Composant optique selon la revendication 1, dans lequel les courbures de ladite lentille de Fresnel (102) sont configurées pour limiter au moins l'un de ce qui suit : une courbure de champ, un astigmatisme, un coma et une aberration sphérique de la lentille de Fresnel (102).

3. Composant optique selon la revendication 1 ou 2, dans lequel ladite lentille de Fresnel (102) est configurée pour être mécaniquement cintrable afin de faire varier les courbures de ladite lentille de Fresnel (102).

4. Composant optique selon la revendication 1, dans lequel ladite lentille de Fresnel (102) comprend les courbes de Fresnel (106) et une structure de support (200), qui est configurée pour supporter les courbes de Fresnel (106) mécaniquement.

5. Composant optique selon la revendication 1, dans lequel le composant optique (100) comprend des composants optiques supplémentaires (100') qui sont configurés pour réduire l'aberration du composant optique.

6. Appareil HUD, dans lequel l'appareil HUD (10) comprend au moins un composant optique (100) selon la revendication 1.

7. Appareil HUD selon la revendication 6, dans lequel l'appareil HUD (10) comprend au moins un écran de diffusion (18) et au moins une unité de génération d'images (12') ;
l'une de l'au moins une unité de génération d'images (12') et l'un de l'au moins un écran de diffusion (18) sont appariés optiquement de sorte que l'une de l'au moins une unité de génération d'images (12') soit configurée pour former une image sur l'un de l'au moins un écran de diffusion (18) ;
l'un de l'au moins un composant optique (100) et l'un de l'au moins un écran de diffusion (18) sont appariés optiquement de sorte que l'un de l'au moins un composant optique (100) soit configuré pour diriger l'image en provenance de l'un de l'au moins un écran de diffusion (18) vers un combineur (16).

8. Appareil HUD selon la revendication 7, dans lequel l'au moins un écran de diffusion (18) comprend un écran de diffusion qui dépend de la longueur d'onde.

9. Appareil HUD selon la revendication 7, dans lequel une pupille de sortie de la source d'images (12) et une pupille d'entrée du système optique HUD (14) correspondent optiquement l'une avec l'autre.

10. Appareil HUD selon la revendication 7, dans lequel chacun de l'au moins un écran de diffusion (18) présente une courbure qui correspond à celle d'une courbure de champ provoquée par le composant optique (100) qui est sa paire optique.

11. Appareil HUD selon la revendication 7, dans lequel l'appareil HUD comprend un ou plusieurs processeurs (2100), et une ou plusieurs mémoires (2102) comportant un code de programme informatique ; et
la une ou plusieurs mémoires (2102) et le code de programme informatique sont configurés pour, avec le un ou plusieurs processeurs (2100), amener l'appareil HUD (10) à corriger la distorsion et/ou la couleur latérale, numériquement, du composant optique (100) en appliquant une distorsion et/ou une couleur latérale opposée à l'unité de génération d'images (12').

12. Appareil HUD selon la revendication 7, dans lequel la une ou plusieurs mémoires (2102) et le code de programme informatique sont configurés pour, avec le un ou plusieurs processeurs (2100), amener l'appareil HUD (10) à contrôler au moins l'un de ce qui suit : un premier dispositif de cintrage (102') afin d'ajuster les courbures d'un côté concave (108) et d'un côté convexe (110) de la lentille de Fresnel (102), et un deuxième dispositif de cintrage (18') afin d'ajuster une courbure de l'écran de diffusion (18).
